# EUROPEAN PATENT APPLICATION

(11) **EP 4 379 992 A1**
(43) Date of publication of application: **05.06.2024**
(21) Application number: 22848032.3
(22) Date of filing: 02.06.2022
(51) Int. Cl.: H02J 3/38

(54) **OFF-GRID POWER SUPPLY SYSTEM AND CONTROL METHOD THEREOF**

(30) Priority: 28.07.2021 CN 202110857549
(71) Applicant: Sungrow Renewables Development Co., Ltd., New & High Technology Industrial Development Zone Hefei, Anhui 230088 (CN)
(72) Inventor: ZHOU, Hui, Hefei, Anhui 230088 (CN); SUN, Deliang, Hefei, Anhui 230088 (CN); LI, Yunsheng, Hefei, Anhui 230088 (CN)
(74) Representative: Epping - Hermann - Fischer
(86) International application number: PCT/CN2022/096852
(87) International publication number: WO 2023/005422

(57) **Abstract**

An off-grid power supply system and a control method thereof provided by the present application, applied to the technical field of power supply. The method comprises: obtaining a first target parameter and a second target parameter; determining a target control policy from a plurality of preset control policies according to the first target parameter and the second target parameter; and finally controlling the operation of an off-grid power supply system according to the target control policy. According to the method provided by the present invention, a plurality of preset control policies is provided for an off-grid power supply system, and each preset control policy defines the power supply priority of each subsystem in the off-grid power supply system, such that different power supply requirements of the off-grid power supply system can be met, the operation of the off-grid power supply system is controlled more accurately, the problem of lack of a control method in the prior art is solved, and promotion and application of the off-grid power supply system are facilitated.

## Description

The present application claims priority to Chinese Patent Application No. 202110857549.2, titled "OFF-GRID POWER SUPPLY SYSTEM AND METHOD FOR CONTROLLING THE SAME", filed on July 28, 2021 with the China National Intellectual Property Administration, which is incorporated herein by reference in its entirety.

### FIELD

The present disclosure relates to the technical field of power supplies, and in particular to an off-grid power supply system and a method for controlling the off-grid power supply system.

### BACKGROUND

Power supply systems with renewable energies and stored energies are most popular among areas such as plateaus, highlands and isolated locations where public utilities fail to reach. Such power supply systems, failing to connect to the public utilities, are referred to as off-grid power supply systems.

Most off-grid power supply systems generate electrical energy form renewable resources, e.g., sunlight or wind. The off-grid power supply system cooperates with an energy storage subsystem, a hydrogen production subsystem, and even an electric vehicle charging subsystem to form an independent power supply network, to stably supply power to the areas where public utilities fail to reach, which is significant to industry and living.

However, the off-grid power supply system is currently immature and fails to be operated effectively, resulting in difficulties with its widespread use.

### SUMMARY

An off-grid power supply system and a method for controlling the off-grid power supply system are provided according to the present disclosure, to operate the off-grid power supply system effectively, thereby solving the difficulties with its widespread use.

The following technical solutions are provided according to the present disclosure for the above purpose.

In a first aspect, a method for controlling an off-grid power supply system is provided according to the present disclosure. The off-grid power supply system includes multiple subsystems. The multiple subsystems include a first energy storage subsystem and a second energy storage subsystem. The method includes: acquiring a first target parameter and a second target parameter, where the first target parameter indicates operation status of the first energy storage subsystem, and the second target parameter indicates operation status of the second energy storage subsystem; determining a target control approach from multiple preset control approaches based on the first target parameter and the second target parameter, wherein in each of the plurality of preset control approaches, the subsystems are prioritized for power supply; and controlling the off-grid power supply system to operate according to the target control approach.

Preferably, the first target parameter comprises battery status of the first energy storage subsystem, the second target parameter comprises battery status of the second energy storage subsystem, and the plurality of preset control approaches comprise an overcharging approach, an undercharging approach, and a balancing approach. The determining the target control approach comprises: determining the overcharging approach as the target control approach if both the battery status of the first energy storage subsystem and the battery status of the second energy storage subsystem are greater than a first battery status threshold; determining the undercharging approach as the target control approach if both the battery status of the first energy storage subsystem and the battery status of the second energy storage subsystem are less than a second battery status threshold; and determining the balancing approach as the target control approach in a case that at least one of the battery status of the first energy storage subsystem and the battery status of the second energy storage subsystem is greater than or equal to the second battery status threshold and is less than or equal to the first battery status threshold.

Preferably, the subsystems further comprise a hydrogen production subsystem, and wherein the controlling the off-grid power supply system to operate according to the target control approach, when the overcharging approach is determined as the target control approach, comprises: acquiring total generation power and total consumption power of the off-grid power supply system; and controlling charging of the hydrogen production subsystem, the first energy storage subsystem and the second energy storage subsystem in descending order of priority, if the total generation power is greater than the total consumption power, wherein the hydrogen production subsystem is prioritized over the first energy storage subsystem, and the first energy storage subsystem is prioritized over the second energy storage subsystem.

Preferably, the controlling charging of the hydrogen production subsystem, the first energy storage subsystem and the second energy storage subsystem in descending order of priority comprises: determining whether to increase hydrogen production power of the hydrogen production subsystem; and increasing the hydrogen production power and reducing power of charging the first energy storage subsystem and power of charging the second energy storage subsystem, if it is determined to increase the hydrogen production power; and increasing the power of charging the first energy storage subsystem or the power of charging the second energy storage subsystem, if it is determined to not increase the hydrogen production power.

Preferably, the determining whether to increase the hydrogen production power comprises: determining to increase the hydrogen production power, if at least one of the battery status of the first energy storage subsystem and the battery status of the second energy storage subsystem is less than a third battery status threshold, a hydrogen reserve in the hydrogen production subsystem is less than a first hydrogen reserve threshold, and the hydrogen production power is less than a hydrogen production power threshold; and determining to not increase the hydrogen production power, if both the battery status of the first energy storage subsystem and the battery status of the second energy storage subsystem are greater than or equal to the third battery status threshold, or the hydrogen reserve is greater than or equal to the first hydrogen reserve threshold, or the hydrogen production power is greater than or equal to the hydrogen production power threshold, wherein the third battery status threshold is greater than the first battery status threshold.

Preferably, the increasing the hydrogen production power and reducing the power of charging the first energy storage subsystem and the power of charging the second energy storage subsystem comprises: increasing the hydrogen production power and reducing the power of charging the first energy storage subsystem and the power of charging the second energy storage subsystem, until the hydrogen production power reaches the hydrogen production power threshold or the power of charging the first energy storage subsystem and the power of charging the second energy storage subsystem are reduced to zero.

Preferably, the subsystems further comprise a power generation subsystem, and the method further comprises: reducing generation power of the power generation subsystem if both the battery status of the first energy storage subsystem and the battery status of the second energy storage subsystem are greater than or equal to the third battery status threshold; and stopping operating the hydrogen production subsystem if the hydrogen reserve is greater than or equal to the first hydrogen reserve threshold.

Preferably, the increasing the power of charging the first energy storage subsystem or the power of charging the second energy storage subsystem comprises: determining whether to increase the power of charging the first energy storage subsystem; increasing the power of charging the first energy storage subsystem and reducing the power of charging the second energy storage subsystem, if it is determined to increase the power of charging the first energy storage subsystem; determining whether to increase the power of charging the second energy storage subsystem, if it is determined to not increase the power of charging the first energy storage subsystem; and increasing the power of charging the second energy storage subsystem, if it is determined to increase the power of charging the second energy storage subsystem.

Preferably, the determining whether to increase the power of charging the first energy storage subsystem comprises: determining to increase the power of charging the first energy storage subsystem, if the battery status of the first energy storage subsystem is less than the third battery status threshold and the power of charging the first energy storage subsystem is less than a charging power threshold; and determining to not increase the power of charging the first energy storage subsystem, if the battery status of the first energy storage subsystem is greater than or equal to the third battery status threshold or the power of charging the first energy storage subsystem is greater than or equal to the charging power threshold.

Preferably, the subsystems further comprise a hydrogen production subsystem, and wherein the controlling the off-grid power supply system to operate according to the target control approach, when the balancing approach is determined as the target control approach, comprises: acquiring total generation power and total consumption power of the off-grid power supply system; and controlling charging of the hydrogen production subsystem, the first energy storage subsystem and the second energy storage subsystem in descending order of priority if the total generation power is greater than the total consumption power, wherein the hydrogen production subsystem is prioritized over the first energy storage subsystem and the second energy storage subsystem, and the first energy storage subsystem and the second energy storage subsystem are of equal priority.

Preferably, the controlling charging of the hydrogen production subsystem, the first energy storage subsystem and the second energy storage subsystem in descending order of priority comprises: determining whether to increase hydrogen production power of the hydrogen production subsystem; and increasing the hydrogen production power and reducing power of charging the first energy storage subsystem and power of charging the second energy storage subsystem, if it is determined to increase the hydrogen production power; and charging the first energy storage subsystem and the second energy storage subsystem at preset intervals, if it is determined to not increase the hydrogen production power.

Preferably, the determining whether to increase the hydrogen production power comprises: determining to increase the hydrogen production power, if a hydrogen reserve in the hydrogen production subsystem is less than a second hydrogen reserve threshold and the hydrogen production power is less than a hydrogen production power threshold; and determining to not increase the hydrogen production power, if the hydrogen reserve in the hydrogen production subsystem is greater than or equal to a first hydrogen reserve threshold or the hydrogen production power reaches the hydrogen production power threshold, wherein the second hydrogen reserve threshold is less than the first hydrogen reserve threshold.

Preferably, the increasing the hydrogen production power and reducing the power of charging the first energy storage subsystem and the power of charging the second energy storage subsystem comprises: increasing the hydrogen production power and reducing the power of charging the first energy storage subsystem and the power of charging the second energy storage subsystem, until the hydrogen production power reaches the hydrogen production power threshold or the power of charging the first energy storage subsystem and the power of charging the second energy storage subsystem are reduced to zero.

Preferably, the charging the first energy storage subsystem and the second energy storage subsystem at preset intervals comprises: stopping operating the hydrogen production subsystem and charging the first energy storage subsystem and the second energy storage subsystem at preset intervals, if the hydrogen reserve is greater than or equal to the first hydrogen reserve threshold; and charging the first energy storage subsystem and the second energy storage subsystem at preset intervals if the hydrogen reserve is greater than or equal to the second hydrogen reserve threshold and is less than the first hydrogen reserve threshold, wherein the power of charging the energy storage subsystem is equal to the hydrogen production power.

Preferably, the method further includes: reducing hydrogen production power of the hydrogen production subsystem and discharging the first energy storage subsystem and the second energy storage subsystem at preset intervals, if the total generation power is less than the total consumption power; and operating the off-grid power supply system in an unchanged mode if the total generation power is equal to the total consumption power.

Preferably, the discharging the first energy storage subsystem and the second energy storage subsystem at preset intervals comprises: reducing the hydrogen production power to zero and discharging the first energy storage subsystem and the second energy storage subsystem at preset intervals, if a hydrogen reserve in the hydrogen production subsystem is greater than a second hydrogen reserve threshold; reducing the hydrogen production power to a preset value and discharging the first energy storage subsystem and the second energy storage subsystem at preset intervals, if the hydrogen reserve is less than or equal to the second hydrogen reserve threshold and is greater than or equal to a third hydrogen reserve threshold; and reducing power of discharging the first energy storage subsystem and power of discharging the second energy storage subsystem to zero and reducing the hydrogen production power, if the hydrogen reserve is less than the third hydrogen reserve threshold, wherein the third hydrogen reserve threshold is less than the second hydrogen reserve threshold, and the preset value is greater than zero.

Preferably, the subsystems further comprise a hydrogen production subsystem and a charging subsystem, and the controlling the off-grid power supply system to operate according to the target control approach, when the undercharging approach is determined as the target control approach, comprises: acquiring total generation power and total consumption power of the off-grid power supply system; and controlling charging of the hydrogen production subsystem, the first energy storage subsystem, the second energy storage subsystem and the charging subsystem in descending order of priority, if the total generation power is greater than the total consumption power, wherein the first energy storage subsystem and the second energy storage subsystem are prioritized over the hydrogen production subsystem, and the hydrogen production subsystem is prioritized over the charging subsystem.

Preferably, the controlling charging of the hydrogen production subsystem, the first energy storage subsystem, the second energy storage subsystem and the charging subsystem in descending order of priority comprises: stopping operating the charging subsystem and reducing hydrogen production power of the hydrogen production subsystem, if a hydrogen reserve in the hydrogen production subsystem is greater than or equal to a third hydrogen reserve threshold; and stopping operating the charging subsystem and the charging subsystem, and supplying the first energy storage subsystem and the second energy storage subsystem with the total generation power, if the hydrogen reserve is less than the third hydrogen reserve threshold and both the battery status of the first energy storage subsystem and the battery status of the second energy storage subsystem are less than a fourth battery status threshold.

In a second aspect, an off-grid power supply system is provided according to the present disclosure. The off-grid power supply system includes a power generation subsystem, a hydrogen production subsystem, a charging subsystem, a first energy storage subsystem, a second energy storage subsystem, a direct current bus, an alternating current bus, and a controller. An output end of the power generation subsystem is connected to the direct current bus. A direct current input end of the hydrogen production subsystem, a direct current end of the first energy storage subsystem, and a direct current end of the second energy storage subsystem are connected to the direct current bus. An alternating current end of the first energy storage subsystem is connected to the alternating current bus. An alternating current input end of the hydrogen production subsystem and the charging subsystem are connected to the alternating current bus. The controller is connected to the power generation subsystem, the hydrogen production subsystem, the charging subsystem, the first energy storage subsystem and the second energy storage subsystem. The controller is configured to perform the method described in the first aspect of the present disclosure.

Preferably, the power generation subsystem includes a photovoltaic system.

With the method for controlling the off-grid power supply system according to the present disclosure, the first target parameter and the second target parameter are acquired, and a target control approach is determined from multiple preset control approaches based on the first target parameter and the second target parameter, and finally the off-grid power supply system is operated according to the target control approach. The multiple preset control approaches are provided for the off-grid power supply system, and each of the preset control approaches prioritizes the subsystems in the off-grid power supply system to which power is supplied to. In this way, the off-grid power supply system can be accurately operated and adaptable to various demands, and therefore can be widely used, thereby solving the difficulties with its widespread use.

### BRIEF DESCRIPTION OF THE DRAWINGS

In order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below are merely used for describing the embodiments of the present disclosure, and those skilled in the art may obtain other drawings according to the drawings without any creative effort.
Figure 1 is a structural block diagram illustrating an off-grid power supply system according to an embodiment of the present disclosure;
Figure 2 is a flowchart illustrating a method for controlling the off-grid power supply system according to an embodiment of the present disclosure;
Figure 3 is a flowchart illustrating the method for controlling the off-grid power supply system according to another embodiment of the present disclosure;
Figure 4 is a flowchart illustrating the method for controlling the off-grid power supply system according to another embodiment of the present disclosure;
Figure 5 is a flowchart illustrating the method for controlling the off-grid power supply system according to another embodiment of the present disclosure; and
Figure 6 is a flowchart illustrating the method for controlling the off-grid power supply system according to another embodiment of the present disclosure.

### DETAILED DESCRIPTION OF EMBODIMENTS

Technical solutions of embodiments of the present disclosure are described clearly and completely below in conjunction with the drawings of the embodiments of the present disclosure. Apparently, the embodiments described below are only some rather than all the embodiments of the present disclosure. Any other embodiments obtained by those skilled in the art based on the embodiments in the present disclosure without any creative effort fall within the protection scope of the present disclosure.

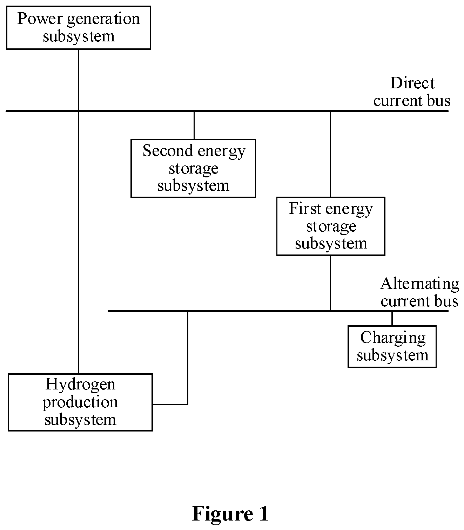

Reference is made to Figure 1, which is a structural block diagram illustrating an off-grid power supply system according to an embodiment of the present disclosure. The off-grid power supply system includes: a power generation subsystem, a hydrogen production subsystem, a charging subsystem, a first energy storage subsystem, a second energy storage subsystem, a direct current bus, an alternating current bus and a controller (not shown).

The power generation subsystem has an output end connected to the direct current bus and serves as a main power source for the off-grid power supply system. In practice, the power generation subsystem is a photovoltaic system, or other power generation system that is independent of the public utilities. The power generation subsystem generates electrical energy, and then directly outputs the electrical energy to the direct current bus.

A direct current input end of the hydrogen production subsystem, a direct current connection end of the first energy storage subsystem and a direct current end of the second energy storage subsystem are connected to the direct current bus. The hydrogen production subsystem directly receives electricity from the direct current bus for hydrogen production. The first energy storage subsystem and the second energy storage subsystem not only receive electricity from the direct current bus for charging but also supply electrical energy to the direct current bus to compensate for insufficient power supplied by the power generation subsystem. In addition, an alternating current end of the first energy storage subsystem is connected to the alternating current bus to output electrical energy to the alternating current bus. Further, as will be detailed below, the first energy storage subsystem is configured to supply power, and the second energy storage subsystem is configured to stabilize a bus voltage.

An alternating current input end of the hydrogen production subsystem and the charging subsystem are connected to the alternating current bus. It should be noted that the alternating current electrical energy received through the alternating current input end of the hydrogen production subsystem is mainly supplied to auxiliary systems such as a cooling water system, an air compressor and alternating current distribution box of the hydrogen production subsystem, instead of the hydrogen production.

A power conversion device, e.g., a DC-to-DC converter or a DC-to-AC converter is also essential for the corresponding subsystem to receive electrical energy properly, which is not detailed herein and can refer to the conventional technology in practice.

The controller is connected to the power generation subsystem, the hydrogen production subsystem, the charging subsystem, the first energy storage subsystem and the second energy storage subsystem. The controller operates the off-grid power supply system by the method according to the following embodiments.

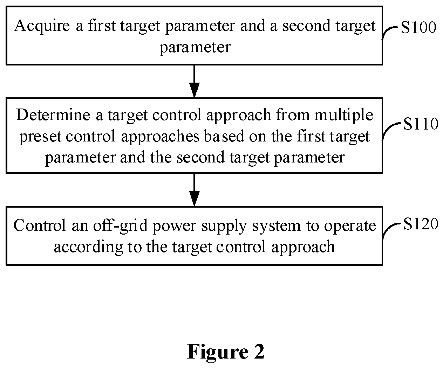

In view of the off-grid power supply system as detailed above, the method for controlling the off-grid power supply system according to the embodiments of the present disclosure is applicable to the controller. In some embodiments, the method is applicable to a server that is arranged at a network side and operates the subsystems in the off-grid power supply system. Referring to Figure 2, the method includes the following steps S100 to S120.

In step S 100, a first target parameter and a second target parameter are acquired.

The first target parameter indicates operation status of the first energy storage subsystem. The second target parameter indicates operation status of the second energy storage subsystem. In some embodiments, the first target parameter indicates battery status of the first energy storage subsystem. The second target parameter indicates battery status of the second energy storage subsystem. How much electrical power is left in the corresponding energy storage subsystem can be directly acquired based on its battery status, and then an operation mode is determined, which will be detailed below instead of here.

The battery status is SOC or SOH, depending on application scenarios. All the alternatives fall within the scope of the present disclosure.

In step S110, a target control strategy is determined from multiple preset control approaches based on the first target parameter and the second target parameter.

The multiple preset control approaches including an overcharging approach, an undercharging approach and a balancing approach are provided to operate the off-grid power supply system. Each of the preset control approaches prioritizes the subsystems in the off-grid power supply system to which power is supplied to. The subsystems described in above and subsequent embodiments are the power generation subsystem, the hydrogen production subsystem, the first energy storage subsystem, the second energy storage subsystem and the charging subsystem as shown in Figure 1.

In a case that the first target parameter is the battery status of the first energy storage subsystem and the second target parameter is the battery status of the second energy storage subsystem, the preset control approach is selected by comparing the battery status and a preset battery status threshold. The battery status threshold is an SOC threshold in a case that the battery status is the SOC, and the battery status threshold is an SOH threshold in a case that the battery status is the SOH.

For example, the battery status is the SOC. When the SOC of the first energy storage subsystem and the SOC of the second energy storage subsystem are both greater than a first SOC threshold, the overcharging approach is determined as the target control approach. In practice, the first SOC threshold may be set to be large, for example, 70%. In this case, electrical power in each of the first energy storage subsystem and the second energy storage subsystem is sufficient, and therefore charging the energy storage subsystem is not the first priority. The control approach in this case is defined as the overcharging approach.

When the SOC of the first energy storage subsystem and the SOC of the second energy storage subsystem are both less than a second SOC threshold, the undercharging approach is determined as the target control approach. Contrary to the overcharging approach, the second SOC threshold is set to be small, for example, 30%, in practice. In this case, electrical power left in each of the first energy storage subsystem and the second energy storage subsystem is insufficient, and therefore charging the first energy storage subsystem and the second energy storage subsystem is the first priority. The control approach in this case is defined as the undercharging approach.

When the SOC of at least one of the first energy storage subsystem and the second energy storage subsystem is greater than or equal to the second SOC threshold and less than or equal to the first SOC threshold, the balancing approach is determined as the target control approach, and depends on respective statuses of the subsystems in the power supply system. The control approach in this case is defined as the balancing control.

It should be noted that the first battery status threshold and the second battery status threshold may be set as needed, and are not limited in the present disclosure.

In step S120, the off-grid power supply system is operated according to the target control approach.

The power supply system is operated based on priorities of the subsystems to be charged as defined in the target control approach after the target control approach is determined.

To summarize, multiple preset control approaches are provided for the off-grid power supply system in the method according to embodiments of the present disclosure, and each of the preset control approaches prioritizes the subsystems in the off-grid power supply system to which power is supplied to. In this way, the off-grid power supply system can be accurately operated and adaptable to various demands, and therefore can be widely used, thereby solving the difficulties with its widespread use.

In the following, the off-grid power supply system is operated according to the target control approach as follows.

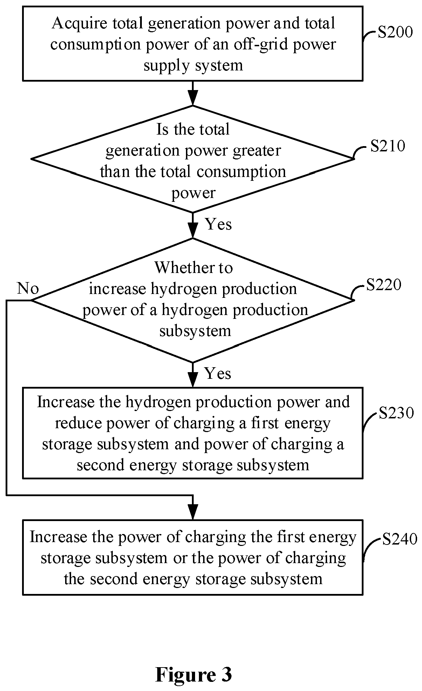

In a case that the overcharging approach is determined as the target control approach, the off-grid power supply system is operated according to the target control approach by the following steps S200 to S240, as shown in Figure 3.

In step S200, total generation power and total consumption power of the off-grid power supply system are acquired.

In practice, the total generation power refers to total power outputted by the power generation subsystem. The first energy storage subsystem and the second energy storage subsystem, although supply power to an electrical load, are supplied by the power generation subsystem in essence. Therefore, the power outputted by the first energy storage subsystem and the power outputted by the second energy storage subsystem are excluded from the total generation power.

The total power-consumption power includes power consumed by the subsystems, that is, the hydrogen production subsystem, the first energy storage subsystem, the second energy storage subsystem and the charging subsystem in the off-grid power supply system, as shown in Figure 1.

In step S210, it is determined whether the total generation power is greater than the total power-consumption power. The method proceeds to step S220 in response to a determination result that the total generation power is greater than the total power-consumption power.

In a case that the total generation power of the off-grid power supply system is greater than the total power-consumption power of the off-grid power supply system, step S220 and subsequent steps are performed. That is, the hydrogen production subsystem, the first energy storage subsystem and the second energy storage subsystem are charged in descending order of priorities. The hydrogen production subsystem is prioritized over the first energy storage subsystem that is prioritized over the second energy storage subsystem. In a case that the total generation power is less than or equal to the total consumption power, the system operates in an unchanged mode.

In step S220, it is determined whether to increase hydrogen production power of the hydrogen production subsystem. The method proceeds to step S230 if determined to increase the hydrogen production power. The method proceeds to step S240 if determined to not increase the hydrogen production power.

In a case that the total generation power is greater than the total consumption power, it is further determined whether to increase the hydrogen production power of the hydrogen production subsystem. The method proceeds to step S230 if determined to increase the hydrogen production power. The method proceeds to step S240 if determined to not increase the hydrogen production power.

Whether to increase the hydrogen production power is determined as follows. If the battery status of at least one the first energy storage subsystem and the second energy storage subsystem is less than a third battery status threshold, a hydrogen reserve in the hydrogen production subsystem is less than a first hydrogen reserve threshold, and the hydrogen production power of the hydrogen production subsystem is less than a hydrogen production power threshold, the hydrogen production power is to be increased. If the battery status of the first energy storage subsystem and the battery status of the second energy storage subsystem are both greater than or equal to the third battery status threshold, the hydrogen reserve is greater than or equal to the first hydrogen reserve threshold, or the hydrogen production power is greater than or equal to the hydrogen production power threshold, the hydrogen production power is to be not increased.

The third battery status threshold is greater than the first battery status threshold described in the previous embodiments. In practice, the third battery status threshold may be set to be large. For example, the battery status is the SOC, and the third SOC threshold may be set to 98%. The third SOC threshold may be set to be smaller, e.g., 90% for the purpose of charging the energy storage subsystem. The third SOC threshold is set to determine whether the energy storage subsystem is already fully charged or fully charged nearly. In view of this, the third SOC threshold depends on actual applications, and thus is not limit in the present disclosure.

Further, the first hydrogen reserve threshold is set to be large, to determine whether to continue with the hydrogen production. For example, the first hydrogen reserve threshold may be set to 98% of a total capacity of a hydrogen storage device. Accordingly, the hydrogen production power threshold depends on maximum hydrogen production power or rated hydrogen production power threshold of the hydrogen production subsystem, to determine whether to increase the hydrogen production power. The first hydrogen reserve threshold and the hydrogen production power threshold are not limited in the present disclosure.

In step S230, the hydrogen production power is increased, and power of charging the first energy storage subsystem and power of charging the second energy storage subsystem are reduced.

In the embodiments, the hydrogen production power is further increased and the power of charging the first energy storage subsystem and the power of charging the second energy storage subsystem are reduced if determined to increase the hydrogen production power, until the hydrogen production power reaches the hydrogen production power threshold or the power of charging the first energy storage subsystem and the power of charging the second energy storage subsystem are reduced to zero. That is, all the electrical energy is supplied to the hydrogen production subsystem for hydrogen production, thereby improving the efficiency of hydrogen production. This indicates that the hydrogen production subsystem is prioritized over the first energy storage subsystem and the second energy storage subsystem.

In step S240, the power of charging the first energy storage subsystem or the power of charging the second energy storage subsystem is increased.

If determined to not increase the hydrogen production power, the power of charging the first energy storage subsystem or the power of charging the second energy storage subsystem is increased. The power generated by the power generation subsystem is stored as much as possible, for subsequent use when the power generation subsystem fails to provide enough power.

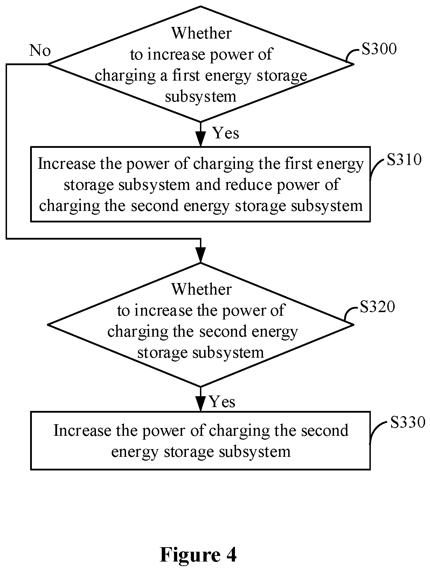

Figure 4 illustrates an alternative of this step, including the following steps S300 to S330.

In step S300, it is determined whether to increase the power of charging the first energy storage subsystem. The process proceeds to step S310 if determined to increase the power of charging the first energy storage subsystem. The process proceeds to step S320 determined to not increase the power of charging the first energy storage subsystem.

If the battery status of the first energy storage subsystem is less than the third battery status threshold, i.e., there is still room for further electrical energy in the first energy storage subsystem, and the power of charging the first energy storage subsystem is less than the charging power threshold and therefore is to be increased, the power of charging the first energy storage subsystem is determined to be further increased. If the battery status of the first energy storage subsystem is greater than or equal to the third battery status threshold, or the power of charging the first energy storage subsystem is greater than or equal to the charging power threshold, it is determined that the power of charging the first energy storage subsystem is to be not increased.

Similar to the thresholds described above, the charging power threshold depends on actual applications, and is not limited in the present disclosure.

In step S310, the power of charging the first energy storage subsystem is increased and the power of charging the second energy storage subsystem is reduced.

If determined to increase the power of charging the first energy storage subsystem, the power of charging the first energy storage subsystem is increased and the power of charging the second energy storage subsystem is reduced, to prioritize the first energy storage subsystem, until the power of charging the first energy storage subsystem reaches the charging power threshold or the power of charging the second energy storage subsystem is reduced to zero. Therefore, the first energy storage subsystem is charged with maximum charging power.

In step S320, it is determined whether to increase the power of charging the second energy storage subsystem. The process proceeds to step S330 if determined to increase the power of charging the second energy storage subsystem.

If determined not to further increase the power of charging the first energy storage subsystem in step S300, it is further determined whether to increase the power of charging the second energy storage subsystem. Step S320 is similar to step S300. That is, if the battery status of the second energy storage subsystem is less than the third battery status threshold and the power of charging the second energy storage subsystem is less than the charging power threshold, the power of charging the second energy storage subsystem is determined to be increased. If the battery status of the second energy storage subsystem is greater than or equal to the third battery status threshold, or the power of charging the second energy storage subsystem is greater than or equal to the charging power threshold, the power of charging the second energy storage subsystem is determined to be not increased.

It should be noted that if the power of charging the second energy storage subsystem is determined to be not further increased here, that is, if the battery status of the first energy storage subsystem and the battery status of the second energy storage subsystem are greater than or equal to the third battery status threshold, the power outputted by the power generation subsystem fails to be fully received. In this case, the power outputted by the power generation subsystem is reduced for stable operation.

In a case that the hydrogen reserve in the hydrogen production subsystem is greater than or equal to the first hydrogen reserve threshold, the hydrogen production subsystem stops operating.

In step S330, the power of charging the second energy storage subsystem is increased.

It should be understood that the power of charging the second energy storage subsystem is increased until it reaches the charging power threshold.

To summarize, in the overcharging approach, the hydrogen production subsystem is prioritized over the first energy storage subsystem that is prioritized over the second energy storage subsystem. The off-grid power supply system is operated in descending order of priority. Hydrogen production is prioritized, improving the utilization of the electrical energy.

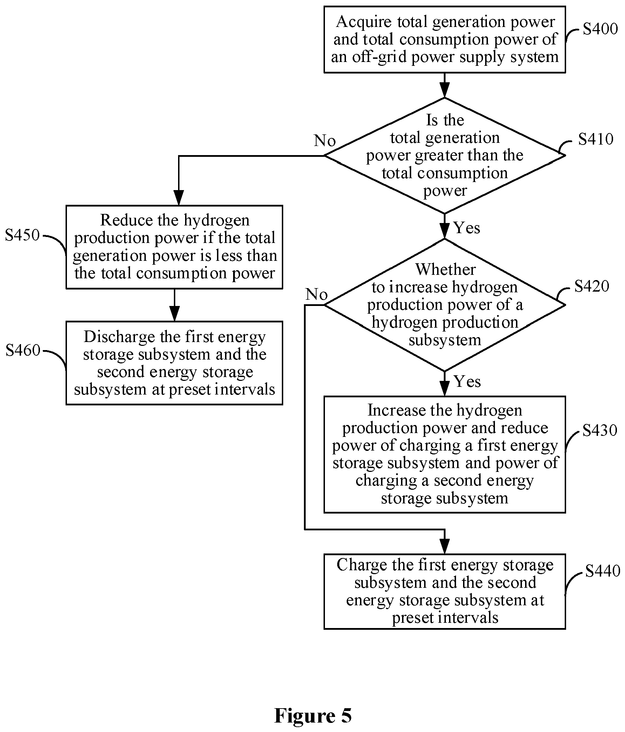

In a case that the balancing is determined as the target control approach, the off-grid power supply system is operated by the following steps S400 to S460, as shown in Figure 5.

In step S400, total generation power and total consumption power of the off-grid power supply system are acquired.

Step S400 can refer to step S200 as shown in Figure 3, and thus is not detailed here.

In step S410, it is determined whether the total generation power is greater than the total consumption power. The method proceeds to step S420 in response to a determination result that the total generation power is greater than the total consumption power. The method proceeds to step S450 in response to a determination result that the total generation power is not greater than the total consumption power.

Step S410 can refer to step S210 as shown in Figure 3, and thus is not detailed here.

In step S420, it is determined whether to increase hydrogen production power of the hydrogen production system. The method proceeds to step S430 if determined to increase the hydrogen production power. The method proceeds to step S440 if determined to not increase the hydrogen production power.

If a hydrogen reserve in the hydrogen production system is less than a second hydrogen reserve threshold and the hydrogen production power of the hydrogen production system is less than the hydrogen production power threshold, it is determined to increase the hydrogen production power. If the hydrogen reserve in the hydrogen production system is greater than or equal to the first hydrogen reserve threshold or the hydrogen production power of the hydrogen production system already reaches the hydrogen production power threshold, it is determined to not increase the hydrogen production power.

It should be noted that the second hydrogen reserve threshold is less than the first hydrogen reserve threshold mentioned in the previous embodiments. For example, the second hydrogen reserve threshold may be set to 70% of the total reserve of hydrogen that can be stored by the hydrogen production system. The hydrogen production power threshold is set according to parameters of the hydrogen production system. The first hydrogen reserve threshold and the hydrogen production power threshold are not limited in the present disclosure.

In step S430, the hydrogen production power of the hydrogen production system is increased, and the power of charging the first energy storage subsystem and the power of charging the second energy storage subsystem are reduced.

If determined to increase the hydrogen production power, the hydrogen production power is increased and the power of charging the first energy storage subsystem and the power of charging the second energy storage subsystem are reduced, until the hydrogen production power reaches the hydrogen production power threshold or the power of charging the first energy storage subsystem and power of charging the second energy storage subsystem are reduced to zero. That is, power consumption by the hydrogen production system is the first top priority, for the hydrogen production subsystem to operate normally.

In step S440, the first energy storage subsystem and the second energy storage subsystem are charged at preset charging intervals.

If it is determined to not increase the hydrogen production power of the hydrogen production system in step S420, the first energy storage subsystem and the second energy storage subsystem are charged at preset charging intervals.

Specifically, further determination may be made based on the hydrogen reserve in the hydrogen production subsystem. If the hydrogen reserve in the hydrogen production subsystem is greater than or equal to the first hydrogen reserve threshold, the hydrogen already saturates the hydrogen production subsystem. In this case, the hydrogen production subsystem stops operating, and the first energy storage subsystem and the second energy storage subsystem are charged at preset charging intervals. If the hydrogen reserve in the hydrogen production subsystem is greater than or equal to the second hydrogen reserve threshold and less than the first hydrogen reserve threshold, the hydrogen production subsystem produces hydrogen at the unchanged hydrogen production power, and the first energy storage subsystem and the second energy storage subsystem are charged at preset charging intervals. In addition, the power of charging the energy storage subsystem (i.e., the first energy storage subsystem or the second energy storage subsystem) is equal to the hydrogen production power of the hydrogen production subsystem.

The first energy storage subsystem and the second energy storage subsystem are charged at preset charging intervals as follows. One of the first energy storage subsystem and the second energy storage subsystem is determined as a target energy storage subsystem. The target energy storage subsystem is charged first until the preset charging interval elapses, and then the other is charged until the preset interval elapses once more, and so on.

In step S450, the hydrogen production power of the hydrogen production subsystem is reduced when the total generation power is less than the total consumption power.

In a case that the total generation power of the power generation subsystem is less than the total consumption power, the hydrogen production power of the hydrogen production subsystem is reduced for stability of the system. The power consumption of the hydrogen production subsystem is reduced first, so that power is supplied to the electrical load as much as possible for normal operation of the electrical load.

In step S460, the first energy storage subsystem and the second energy storage subsystem are discharged at preset discharging intervals.

In order to finely control the discharging of the first energy storage subsystem and the second energy storage subsystem, the second hydrogen reserve threshold and a third hydrogen reserve threshold are further defined based on the first hydrogen reserve threshold. In addition, the second hydrogen reserve threshold is less than the first hydrogen reserve threshold. The third hydrogen reserve threshold is less than the second hydrogen reserve threshold. For example, the second hydrogen reserve threshold may be set to 70% of the total reserve, and the third hydrogen reserve threshold may be set to 30% of the total reserve.

Based on this, it is further determined whether the hydrogen reserve in the hydrogen production subsystem is greater than the second hydrogen reserve threshold. If the hydrogen reserve in the hydrogen production subsystem is greater than the second hydrogen reserve threshold, the hydrogen production power of the hydrogen production subsystem is directly reduced to zero, and the first energy storage subsystem and the second energy storage subsystem are discharged at preset discharging intervals.

If the hydrogen reserve in the hydrogen production subsystem is less than or equal to the second hydrogen reserve threshold and greater than or equal to the third hydrogen reserve threshold, the hydrogen production power of the hydrogen production subsystem is reduced to a preset value. That is, the hydrogen production subsystem still produces hydrogen at relatively small hydrogen production power instead of directly stops producing hydrogen, and the first energy storage subsystem and the second energy storage subsystem are discharged at preset discharging intervals.

Furthermore, if the hydrogen reserve in the hydrogen production subsystem is less than the third hydrogen reserve threshold, the power of discharging the first energy storage subsystem and the power of discharging the second energy storage subsystem are reduced to zero, and the hydrogen production power of the hydrogen production subsystem is reduced.

It should be noted that details that the first energy storage subsystem and the second energy storage subsystem are discharged at preset discharging intervals are similar to the details that the first energy storage subsystem and the second energy storage subsystem are charged at preset charging intervals as described above. Specifically, one of the first energy storage subsystem and the second energy storage subsystem is determined as a target energy storage subsystem. The target energy storage subsystem is discharged first until the preset discharging interval elapses, and then the other is discharged until the preset discharging interval elapses once more, and so on.

If the total generation power of the power generation subsystem is equal to the total consumption power, the off-grid power supply system operates in the unchanged mode.

To summarize, in the balancing approach, the hydrogen production subsystem, the first energy storage subsystem and the second energy storage subsystem are also charged in descending order of priority. The hydrogen production subsystem is prioritized over the first energy storage subsystem and the second energy storage subsystem. The first energy storage subsystem and the second energy storage subsystem are of equal priority. That is, the first energy storage subsystem and the second energy storage subsystem are charged simultaneously, or discharged simultaneously.

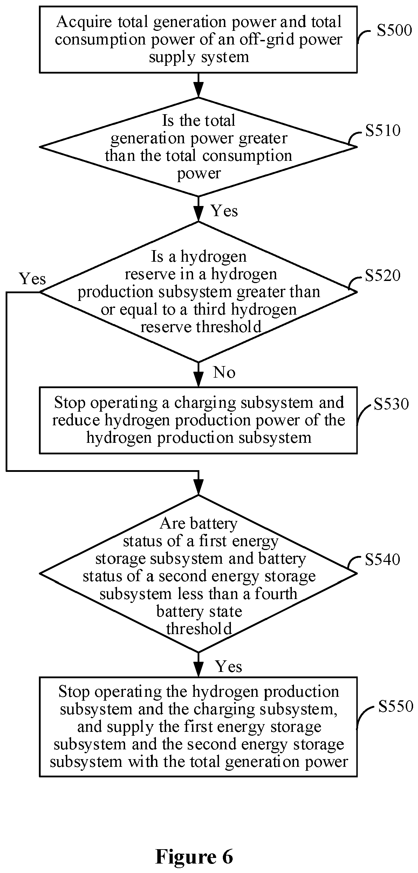

In a case that the undercharging approach is determined as the target control approach, the off-grid power supply system is operated by the following steps S500 to S550, as shown in Figure 6.

In step S500, total generation power and total consumption power of the off-grid power supply system are acquired.

Step S500 can refer to step S200 as shown in Figure 3, and thus is not detailed here.

In step S510, it is determined whether the total generation power is greater than the total consumption power. The method proceeds to step S520 in response to a determination result that the total generation power is greater than the total consumption power.

Step S510 can refer to step S210 as shown in Figure 3, and thus is not detailed here.

If the total generation power is equal to the total consumption power, the system operates in the unchanged mode. If the total generation power is less than the total consumption power, power consumption of the electrical load is reduced. It should be noted that the hydrogen production power is reduced first due to the specialness of the hydrogen production load, in order to reduce the power consumption. That is, the hydrogen production consumption is reduced first and then power consumption of other loads connected to the system is gradually reduced.

In step S520, it is determined whether the hydrogen reserve in the hydrogen production subsystem is greater than or equal to the third hydrogen reserve threshold. The method proceeds to step S530 in response to a determination result that the hydrogen reserve in the hydrogen production subsystem is less than the third hydrogen reserve threshold. The method proceeds to step S540 in response to a determination result that the hydrogen reserve in the hydrogen production subsystem is greater than or equal to the third hydrogen reserve threshold.

In step S530, the charging subsystem stops operating and the hydrogen production power of the hydrogen production subsystem is reduced.

In a case that the hydrogen reserve in the hydrogen production subsystem is less than the third hydrogen reserve threshold, the charging subsystem stops operating first to reduce the total consumption power. Further, the hydrogen production power of the hydrogen production subsystem is gradually reduced until the hydrogen production power is reduced to zero.

In step S540, it is determined whether both the battery status of the first energy storage subsystem and the battery status of the second energy storage subsystem are less than a fourth battery status threshold. The method proceeds to step S550 in response to a determination result that both the battery status of the first energy storage subsystem and the battery status of the second energy storage subsystem are less than the fourth battery status threshold.

In a case that the hydrogen reserve in the hydrogen production subsystem is greater than or equal to the third hydrogen reserve threshold, the battery status of the first energy storage subsystem is compared with the fourth battery status threshold and the battery status of the second energy storage subsystem is compared with the fourth battery status threshold. It should be noted that the fourth battery status threshold is set to be small, i.e., less than all the above battery status thresholds. For example, the fourth battery status threshold is set to 2%. If the battery status of the energy storage subsystem is less than the fourth battery status threshold, the energy storage subsystem is out of battery and is charged.

At least one of the first energy storage subsystem and the second energy storage subsystem at the battery status greater than the fourth battery status threshold, is discharged with increased power.

In step S550, the hydrogen production subsystem and the charging subsystem stop operating, and the first energy storage subsystem and the second energy storage subsystem are supplied with the total generation power.

In a case that the hydrogen reserve in the hydrogen production subsystem is greater than or equal to the third hydrogen reserve threshold and the battery status of each of the first energy storage subsystem and the second energy storage subsystem is less than the fourth battery status threshold, the hydrogen production subsystem and the charging subsystem stop operating, and the first energy storage subsystem and the second energy storage subsystem supplied with the total generation power. That is, all the power outputted by the power generation subsystem is supplied to the energy storage subsystems.

As can be seen from the above that in the undercharging approach, the hydrogen production subsystem, the first energy storage subsystem, the second energy storage subsystem and the charging subsystem are also prioritized. However, the first energy storage subsystem and the second energy storage subsystem are prioritized over the hydrogen production subsystem that is prioritized over the charging subsystem in the undercharging approach.

With the method according to the above embodiments that is applicable to the off-grid power supply system including two energy storage subsystems, the off-grid power supply system can be accurately operated and adaptable to various demands, and therefore can be widely used, thereby solving the difficulties with its widespread use. Furthermore, the first energy storage subsystem and the second energy storage subsystem are controlled separately, and therefore fulfil respective functions. The first energy storage subsystem mainly supplies power to the electrical load, and therefore is prioritized over the second energy storage subsystem in the process of charging and discharging. The second energy storage subsystem mainly stabilizes a voltage across the direct current bus. Therefore, the SOC of the second energy storage subsystem is within an appropriate range to stabilize the output voltage, and therefore is of relatively low priority. The first energy storage subsystem and the second energy storage subsystem cooperate with each other, effectively improving the stability of the off-grid power supply system.

The above embodiments in the specification are described in a progressive manner. The embodiments each focus on the differences from other embodiments, and reference may be made to each other with respect to the same or similar parts. Since the devices disclosed in the embodiments corresponds to the method disclosed in the embodiments, the description for the device is simple, and reference may be made to the method in the embodiments for the relevant parts.

Merely preferred embodiments of the present application are described above and the present disclosure is not limited thereto. Although the present application is disclosed as above with preferred embodiments, which are not intended to limit the present application. Various alternations, modifications and equivalents can be made to the technical solutions of the present disclosure by those skilled in the art in light of the method and technical contents disclosed herein without departing from the scope of the present disclosure. Therefore, any simple changes, equivalent variations and modifications made to the above embodiments according to the technical essence of the present disclosure without departing the content of the technical solutions of the present disclosure fall within the protection scope of the technical solutions of the present application.

## Claims

1. A method for controlling an off-grid power supply system, wherein the off-grid power supply system comprises subsystems comprising a first energy storage subsystem and a second energy storage subsystem, and the method comprises:
acquiring a first target parameter and a second target parameter, wherein the first target parameter indicates operation status of the first energy storage subsystem, and the second target parameter indicates operation status of the second energy storage subsystem;
determining a target control approach from a plurality of preset control approaches based on the first target parameter and the second target parameter, wherein in each of the plurality of preset control approaches, the subsystems are prioritized for power supply; and
controlling the off-grid power supply system to operate according to the target control approach.

2. The method according to claim 1, wherein the first target parameter comprises battery status of the first energy storage subsystem, the second target parameter comprises battery status of the second energy storage subsystem, and the plurality of preset control approaches comprise an overcharging approach, an undercharging approach, and a balancing approach; and wherein the determining the target control approach comprises:
determining the overcharging approach as the target control approach if both the battery status of the first energy storage subsystem and the battery status of the second energy storage subsystem are greater than a first battery status threshold;
determining the undercharging approach as the target control approach if both the battery status of the first energy storage subsystem and the battery status of the second energy storage subsystem are less than a second battery status threshold; and
determining the balancing approach as the target control approach in a case that at least one of the battery status of the first energy storage subsystem and the battery status of the second energy storage subsystem is greater than or equal to the second battery status threshold and is less than or equal to the first battery status threshold.

3. The method according to claim 2, wherein the subsystems further comprise a hydrogen production subsystem, and wherein the controlling the off-grid power supply system to operate according to the target control approach, when the overcharging approach is determined as the target control approach, comprises:
acquiring total generation power and total consumption power of the off-grid power supply system; and
controlling charging of the hydrogen production subsystem, the first energy storage subsystem and the second energy storage subsystem in descending order of priority, if the total generation power is greater than the total consumption power, wherein the hydrogen production subsystem is prioritized over the first energy storage subsystem, and the first energy storage subsystem is prioritized over the second energy storage subsystem.

4. The method according to claim 3, wherein the controlling charging of the hydrogen production subsystem, the first energy storage subsystem and the second energy storage subsystem in descending order of priority comprises:
determining whether to increase hydrogen production power of the hydrogen production subsystem; and
increasing the hydrogen production power and reducing power of charging the first energy storage subsystem and power of charging the second energy storage subsystem, if it is determined to increase the hydrogen production power; and
increasing the power of charging the first energy storage subsystem or the power of charging the second energy storage subsystem, if it is determined to not increase the hydrogen production power.

5. The method according to claim 4, wherein the determining whether to increase the hydrogen production power comprises:
determining to increase the hydrogen production power, if at least one of the battery status of the first energy storage subsystem and the battery status of the second energy storage subsystem is less than a third battery status threshold, a hydrogen reserve in the hydrogen production subsystem is less than a first hydrogen reserve threshold, and the hydrogen production power is less than a hydrogen production power threshold; and
determining to not increase the hydrogen production power, if both the battery status of the first energy storage subsystem and the battery status of the second energy storage subsystem are greater than or equal to the third battery status threshold, or the hydrogen reserve is greater than or equal to the first hydrogen reserve threshold, or the hydrogen production power is greater than or equal to the hydrogen production power threshold, wherein the third battery status threshold is greater than the first battery status threshold.

6. The method according to claim 5, wherein the increasing the hydrogen production power and reducing the power of charging the first energy storage subsystem and the power of charging the second energy storage subsystem comprises:
increasing the hydrogen production power and reducing the power of charging the first energy storage subsystem and the power of charging the second energy storage subsystem, until the hydrogen production power reaches the hydrogen production power threshold or the power of charging the first energy storage subsystem and the power of charging the second energy storage subsystem are reduced to zero.

7. The method according to claim 5, wherein the subsystems further comprise a power generation subsystem, and the method further comprises:
reducing generation power of the power generation subsystem if both the battery status of the first energy storage subsystem and the battery status of the second energy storage subsystem are greater than or equal to the third battery status threshold; and
stopping operating the hydrogen production subsystem if the hydrogen reserve is greater than or equal to the first hydrogen reserve threshold.

8. The method according to claim 5, wherein the increasing the power of charging the first energy storage subsystem or the power of charging the second energy storage subsystem comprises:
determining whether to increase the power of charging the first energy storage subsystem;
increasing the power of charging the first energy storage subsystem and reducing the power of charging the second energy storage subsystem, if it is determined to increase the power of charging the first energy storage subsystem;
determining whether to increase the power of charging the second energy storage subsystem, if it is determined to not increase the power of charging the first energy storage subsystem; and
increasing the power of charging the second energy storage subsystem, if it is determined to increase the power of charging the second energy storage subsystem.

9. The method according to claim 8, wherein the determining whether to increase the power of charging the first energy storage subsystem comprises:
determining to increase the power of charging the first energy storage subsystem, if the battery status of the first energy storage subsystem is less than the third battery status threshold and the power of charging the first energy storage subsystem is less than a charging power threshold; and
determining to not increase the power of charging the first energy storage subsystem, if the battery status of the first energy storage subsystem is greater than or equal to the third battery status threshold or the power of charging the first energy storage subsystem is greater than or equal to the charging power threshold.

10. The method according to claim 2, wherein the subsystems further comprise a hydrogen production subsystem, and wherein the controlling the off-grid power supply system to operate according to the target control approach, when the balancing approach is determined as the target control approach, comprises:
acquiring total generation power and total consumption power of the off-grid power supply system; and
controlling charging of the hydrogen production subsystem, the first energy storage subsystem and the second energy storage subsystem in descending order of priority if the total generation power is greater than the total consumption power, wherein the hydrogen production subsystem is prioritized over the first energy storage subsystem and the second energy storage subsystem, and the first energy storage subsystem and the second energy storage subsystem are of equal priority.

11. The method according to claim 10, wherein the controlling charging of the hydrogen production subsystem, the first energy storage subsystem and the second energy storage subsystem in descending order of priority comprises:
determining whether to increase hydrogen production power of the hydrogen production subsystem; and
increasing the hydrogen production power and reducing power of charging the first energy storage subsystem and power of charging the second energy storage subsystem, if it is determined to increase the hydrogen production power; and
charging the first energy storage subsystem and the second energy storage subsystem at preset intervals, if it is determined to not increase the hydrogen production power.

12. The method according to claim 11, wherein the determining whether to increase the hydrogen production power comprises:
determining to increase the hydrogen production power, if a hydrogen reserve in the hydrogen production subsystem is less than a second hydrogen reserve threshold and the hydrogen production power is less than a hydrogen production power threshold; and
determining to not increase the hydrogen production power, if the hydrogen reserve in the hydrogen production subsystem is greater than or equal to a first hydrogen reserve threshold or the hydrogen production power reaches the hydrogen production power threshold, wherein the second hydrogen reserve threshold is less than the first hydrogen reserve threshold.

13. The method according to claim 12, wherein the increasing the hydrogen production power and reducing the power of charging the first energy storage subsystem and the power of charging the second energy storage subsystem comprises:
increasing the hydrogen production power and reducing the power of charging the first energy storage subsystem and the power of charging the second energy storage subsystem, until the hydrogen production power reaches the hydrogen production power threshold or the power of charging the first energy storage subsystem and the power of charging the second energy storage subsystem are reduced to zero.

14. The method according to claim 12, wherein the charging the first energy storage subsystem and the second energy storage subsystem at preset intervals comprises:
stopping operating the hydrogen production subsystem and charging the first energy storage subsystem and the second energy storage subsystem at preset intervals, if the hydrogen reserve is greater than or equal to the first hydrogen reserve threshold; and
charging the first energy storage subsystem and the second energy storage subsystem at preset intervals if the hydrogen reserve is greater than or equal to the second hydrogen reserve threshold and is less than the first hydrogen reserve threshold, wherein the power of charging the energy storage subsystem is equal to the hydrogen production power.

15. The method according to claim 10, further comprising:
reducing hydrogen production power of the hydrogen production subsystem and discharging the first energy storage subsystem and the second energy storage subsystem at preset intervals, if the total generation power is less than the total consumption power; and
operating the off-grid power supply system in an unchanged mode if the total generation power is equal to the total consumption power.

16. The method according to claim 15, wherein the discharging the first energy storage subsystem and the second energy storage subsystem at preset intervals comprises:
reducing the hydrogen production power to zero and discharging the first energy storage subsystem and the second energy storage subsystem at preset intervals, if a hydrogen reserve in the hydrogen production subsystem is greater than a second hydrogen reserve threshold;
reducing the hydrogen production power to a preset value and discharging the first energy storage subsystem and the second energy storage subsystem at preset intervals, if the hydrogen reserve is less than or equal to the second hydrogen reserve threshold and is greater than or equal to a third hydrogen reserve threshold; and
reducing power of discharging the first energy storage subsystem and power of discharging the second energy storage subsystem to zero and reducing the hydrogen production power, if the hydrogen reserve is less than the third hydrogen reserve threshold, wherein the third hydrogen reserve threshold is less than the second hydrogen reserve threshold, and the preset value is greater than zero.

17. The method according to claim 2, wherein the subsystems further comprise a hydrogen production subsystem and a charging subsystem, and the controlling the off-grid power supply system to operate according to the target control approach, when the undercharging approach is determined as the target control approach, comprises:
acquiring total generation power and total consumption power of the off-grid power supply system; and
controlling charging of the hydrogen production subsystem, the first energy storage subsystem, the second energy storage subsystem and the charging subsystem in descending order of priority, if the total generation power is greater than the total consumption power, wherein the first energy storage subsystem and the second energy storage subsystem are prioritized over the hydrogen production subsystem, and the hydrogen production subsystem is prioritized over the charging subsystem.

18. The method according to claim 17, wherein the controlling charging of the hydrogen production subsystem, the first energy storage subsystem, the second energy storage subsystem and the charging subsystem in descending order of priority comprises:
stopping operating the charging subsystem and reducing hydrogen production power of the hydrogen production subsystem, if a hydrogen reserve in the hydrogen production subsystem is greater than or equal to a third hydrogen reserve threshold; and
stopping operating the charging subsystem and the charging subsystem, and supplying the first energy storage subsystem and the second energy storage subsystem with the total generation power, if the hydrogen reserve is less than the third hydrogen reserve threshold and both the battery status of the first energy storage subsystem and the battery status of the second energy storage subsystem are less than a fourth battery status threshold.

19. An off-grid power supply system, comprising:
a power generation subsystem;
a hydrogen production subsystem;
a charging subsystem;
a first energy storage subsystem;
a second energy storage subsystem;
a direct current bus;
an alternating current bus; and
a controller, wherein
an output end of the power generation subsystem is connected to the direct current bus;
a direct current input end of the hydrogen production subsystem, a direct current end of the first energy storage subsystem, and a direct current end of the second energy storage subsystem are connected to the direct current bus;
an alternating current end of the first energy storage subsystem is connected to the alternating current bus;
an alternating current input end of the hydrogen production subsystem and the charging subsystem are connected to the alternating current bus;
the controller is connected to the power generation subsystem, the hydrogen production subsystem, the charging subsystem, the first energy storage subsystem and the second energy storage subsystem; and
the controller is configured to perform the method according to any one of claims 1 to 18.

20. The off-grid power supply system according to claim 19, wherein the power generation subsystem comprises a photovoltaic system.
